# EUROPÄISCHE PATENTSCHRIFT

(11) **EP 3 013 919 B1**
(45) Veröffentlichungstag und Bekanntmachung des Hinweises auf die Patenterteilung: **07.08.2019**
(21) Anmeldenummer: 14730141.0
(22) Anmeldetag: 11.06.2014
(51) Int. Cl.: C09K 3/14, B24D 3/34, B24D 18/00

(54) **SCHLEIFELEMENT**
GRINDING ELEMENT
ÉLÉMENT ABRASIF

(30) Priorität: 28.06.2013 DE 102013212687
(43) Veröffentlichungstag der Anmeldung: 04.05.2016
(73) Patentinhaber: Robert Bosch GmbH, 70442 Stuttgart (DE)
(72) Erfinder: WIRZ, Viktor, CH-8570 Weinfelden (CH)
(86) Internationale Anmeldenummer: PCT/EP2014/062152
(87) Internationale Veröffentlichungsnummer: WO 2014/206739

(56) Entgegenhaltungen:
- WO-A1-01/85393
- GB-A- 2 315 777
- US-A- 5 378 251
- US-A- 5 551 962
- US-A- 5 942 015
- US-A1- 2010 159 806

## Beschreibung

### Stand der Technik

In US 5,942,015 ist bereits ein Schleifelement zum Aufstreuen auf einen Schleifscheibengrundkörper vorgeschlagen worden, welches im Rahmen einer Weiterverarbeitung mittels einer "*abrasive slurry"* mit einem Zusatzwirkmaterial und Binder vermengt wird, sodass ein beschichteter Schleifartikel (*"coated abrasive*") entsteht.

### Offenbarung der Erfindung

Die Erfindung geht aus von einem Schleifelement mit einem Grundkörper, der zumindest ein keramisches Grundmaterial umfasst.

Es wird vorgeschlagen, dass der Grundkörper zumindest ein Zusatzwirkmaterial umfasst, das zumindest in einem Betriebszustand zumindest teilweise zu einer Beeinflussung zumindest eines Bearbeitungsparameters vorgesehen ist, wobei das Grundmaterial des Grundkörpers mit dem zumindest einen Zusatzwirkmaterial durchmischt ist. Das Grundmaterial ist vorzugsweise zumindest teilweise aus zumindest einem Korund gebildet. Das Grundmaterial umfasst zumindest eine Keramik. Unter einem "Zusatzwirkmaterial" soll in diesem Zusammenhang insbesondere ein Stoff und/oder ein Stoffgemisch verstanden werden, das dazu vorgesehen ist, zumindest eine Stoff- und/oder Bearbeitungseigenschaft zur Verfügung zu stellen, die zumindest teilweise von den Stoff- und/oder Bearbeitungseigenschaften des Grundmaterials abweichen oder diese gezielt verbessern. Unter einer "Beeinflussung" soll in diesem Zusammenhang insbesondere eine gezielte Änderung des Betriebsparameters im Vergleich zu einer Ausgestaltung ohne das Zusatzwirkmaterial verstanden werden. Unter einem "Bearbeitungsparameter" soll in diesem Zusammenhang insbesondere eine, insbesondere physikalische, Kenngröße zumindest des Schleifelements verstanden werden, die in zumindest einem Betriebszustand zumindest teilweise konstant und/oder variabel auftritt. Der zumindest eine Betriebsparameter umfasst vorzugsweise eine Temperatur, eine Härte und/oder eine andere, einem Fachmann als sinnvoll erscheinende, insbesondere physikalische, Kenngröße.

Durch die erfindungsgemäße Ausgestaltung des Schleifelements können bevorzugte Eigenschaften und eine vorteilhaft gute Anpassung des Schleifelements erreicht werden.

Ferner wird vorgeschlagen, dass das zumindest eine Zusatzwirkmaterial zumindest teilweise zu einer aktiven Beeinflussung zumindest eines Bearbeitungsparameters vorgesehen ist. Unter einer "aktiven Beeinflussung" soll in diesem Zusammenhang insbesondere eine gezielte Änderung des Betriebsparameters während eines Betriebszustands im Vergleich zu einer Ausgestaltung ohne das Zusatzwirkmaterial verstanden werden. Vorzugsweise wird das Zusatzwirkmaterial in einem Betriebszustand, insbesondere durch eine Erwärmung des Schleifelements, beispielsweise durch ein Aufschmelzen, aktiviert und besonders bevorzugt stellt das Zusatzwirkmaterial in diesem aktivierten Zustand die zumindest eine Stoff- und/oder Bearbeitungseigenschaft zur Verfügung. Dadurch kann eine bevorzugt gezielte Anpassung und/oder Beeinflussung des zumindest einen Betriebsparameters und vorzugsweise zumindest einer Bearbeitungseigenschaft des Schleifelements erreicht werden.

Zudem wird vorgeschlagen, dass das zumindest eine Zusatzwirkmaterial zumindest teilweise stoffschlüssig mit dem Grundmaterial verbunden ist. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Dadurch kann auf vorteilhaft einfache Weise eine bevorzugt zuverlässige und konstruktiv einfache Ausgestaltung des Schleifelements erreicht werden.

Des Weiteren wird vorgeschlagen, dass das zumindest eine Zusatzwirkmaterial über zumindest einen Teil des Grundkörpers verteilt angeordnet ist. In einem besonders bevorzugten Ausführungsbeispiel ist das zumindest eine Zusatzwirkmaterial zumindest nahezu gleichmäßig über zumindest einen Teil des Grundkörpers verteilt angeordnet. Dadurch kann eine bevorzugt gezielte und insbesondere gleichmäßige Anpassung und/oder Beeinflussung des zumindest einen Betriebsparameters erreicht werden.

Ferner wird vorgeschlagen, dass das zumindest eine Zusatzwirkmaterial zumindest Avogadrit umfasst, das zumindest teilweise zu einer Kühlung in einem Betriebszustand vorgesehen ist. Unter "Avogadrit" soll in diesem Zusammenhang ein Material aus der Gruppe der Mineralien, insbesondere aus der Mineralklasse der Halogeniden, verstanden werden, das insbesondere zumindest teilweise ein orthorhombisches Kristallsystem aufweist. Avogadrit weist die chemische Formel (K,Cs)BF₄ auf. Dadurch kann eine bevorzugt gute Kühlung des Schleifelements, insbesondere in einem Betriebszustand, erreicht werden.

Zudem wird vorgeschlagen, dass das zumindest eine Zusatzwirkmaterial zumindest Wolframcarbid zu einer Erhöhung einer Härte des Grundkörpers umfasst. Wolframcarbid weist die chemische Summenformel WC auf. Wolframcarbid zählt zu den nichtoxidischen Keramiken und weist eine Härte von insbesondere zumindest 2000 HV und besonders bevorzugt von zumindest nahezu 2300 HV auf. Dadurch kann auf konstruktiv einfache Weise eine bevorzugt hohe Härte des Schleifelements erreicht werden, wodurch insbesondere eine bevorzugt gute Bearbeitung von Hartmetallen erreicht werden kann.

Ferner ist es auch denkbar, dass das zumindest eine Zusatzwirkmaterial, alternativ oder zusätzlich, Kryolith (Aluminiumtrinatriumhexafluorid; Na₃[AlF₆]), Kaliumkryolith (K₃[AlF₆]), Kaliumfluoroaluminat (K₁₋₃[AlF₄₋₆]), Kaliumfluoroborat (KBF₄) und/oder andere, einem Fachmann als sinnvoll erscheinende Stoffe und/oder Stoffgemische umfasst. Des Weiteren wird ein Verfahren zur Herstellung eines erfindungsgemäßen Schleifelements mit zumindest einem ersten Schritt, in dem ein Grundmaterial mit zumindest einem Zusatzwirkmaterial vermischt wird und mit zumindest einem weiteren Schritt, in dem ein Grundkörper aus dem Grundmaterial und dem zumindest einen Zusatzwirkmaterial geformt wird, vorgeschlagen. Dadurch kann auf vorteilhaft einfache und kostengünstige Weise ein bevorzugt stabiles Schleifelement erreicht werden.

Zudem wird vorgeschlagen, dass das Verfahren zumindest einen weiteren Schritt aufweist, der ein Sinterverfahren umfasst. Dadurch kann auf vorteilhaft einfache und kostengünstige Weise ein bevorzugt stabiles Schleifelement mit einer vorteilhaft hohen Standzeit erreicht werden.

Das erfindungsgemäße Schleifelement soll hierbei nicht auf die oben beschriebene Anwendung und Ausführungsform beschränkt sein. Insbesondere kann das erfindungsgemäße Schleifelement zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schleifeinheit mit erfindungsgemäßen Schleifelementen in einer schematischen Draufsicht,
- Fig. 2: eine erste Ausgestaltung des erfindungsgemäßen Schleifelements in einer perspektivischen Darstellung,
- Fig. 3: eine weitere Ausgestaltung des erfindungsgemäßen Schleifelements in einer perspektivischen Darstellung und
- Fig. 4: eine weitere Ausgestaltung des erfindungsgemäßen Schleifelements in einer perspektivischen Darstellung.

### Beschreibung der Ausführungsbeispiele

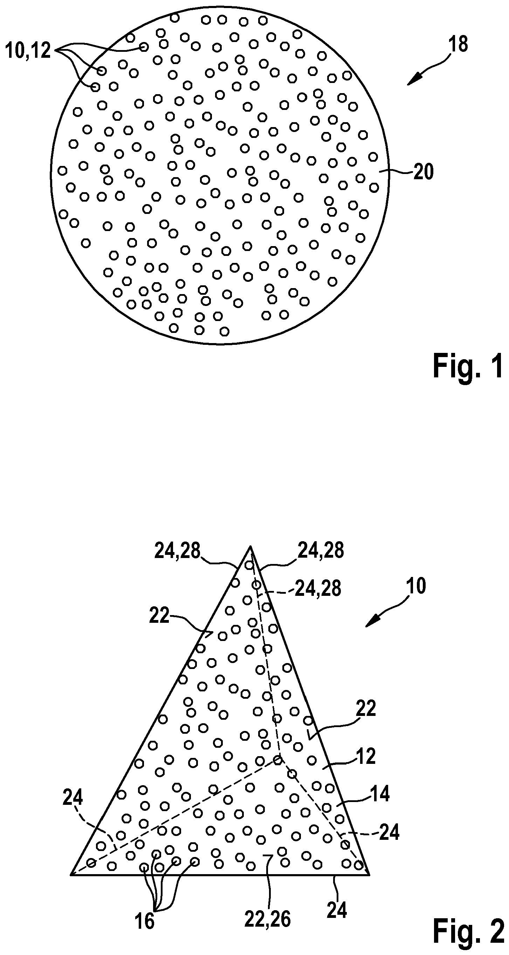

In Figur 1 ist eine von einer Schleifscheibe gebildete Schleifeinheit 18 dargestellt, die mehrere Schleifelemente 10 aufweist. Die Schleifelemente 10 sind dabei fest mit einem Schleifscheibengrundkörper 20 der Schleifeinheit 18 verbunden. Die Schleifelemente 10 sind stoffschlüssig mit dem Schleifscheibengrundkörper 20 verbunden. Auf den Schleifscheibengrundkörper 20 wird hierfür in einem ersten Schritt ein Klebstoff, der einen Grundbinder bildet, aufgebracht, sodass sich eine Klebeschicht bildet. In einem weiteren Schritt werden die Schleifelemente 10 auf die frisch aufgetragene Klebeschicht des Schleifscheibengrundkörpers 20 aufgestreut. Die Schleifelemente 10 bleiben an der Klebeschicht haften. Nach einem Trocknen der Klebeschicht verbindet die Klebeschicht die Schleifelemente 10 stoffschlüssig mit dem Schleifscheibengrundkörper 20 der Schleifeinheit 18. Die Schleifelemente 10 bilden auf dem Schleifscheibengrundkörper 20 eine von einer Schleiffläche gebildete Abrasionsgeometrie.

In Figur 2 ist ein Schleifelement 10 der Schleifeinheit 18 dargestellt. Das Schleifelement 10 weist einen Grundkörper 12 auf, der tetraederförmig ausgebildet ist. Es sind jedoch auch andere, einem Fachmann als sinnvoll erscheinende, geometrisch definierte oder geometrisch undefinierte Formen des Grundkörpers 12 denkbar. Der Grundkörper 12 umfasst vier identisch ausgebildete Seitenflächen 22 sowie sechs gleich lange Seitenkanten 24. Eine der Seitenflächen 22 ist dazu vorgesehen, in einem montierten Zustand des Schleifelements 10 auf der Schleifeinheit 18 eine Aufständerfläche 26 zu bilden. Die Seitenkanten 24 des Grundkörpers 12, die abgewinkelt zu der die Aufständerfläche 26 bildenden Seitenfläche 22 des Grundkörpers 12 angeordnet sind, bilden Abrasionskanten 28 des Schleifelements 10. Die Abrasionskanten 28 sind in einem Betriebszustand der Schleifeinheit 18 zu einem Materialabtrag eines zu bearbeitenden Werkstücks vorgesehen. Durch die gleichmäßige und symmetrische Ausgestaltung des tetraederförmigen Grundkörpers 12 können alle Seitenkanten 24 des Grundkörpers 12 die Abrasionskanten 28 und jede der Seitenflächen 22 des Grundkörpers 12 die Aufständerfläche 26 bilden.

Der Grundkörper 12 des Schleifelements 10 umfasst ein Grundmaterial 14 und ein Zusatzwirkmaterial 16. Das Grundmaterial 14 ist von Korund gebildet. Es ist jedoch auch denkbar, dass das Grundmaterial 14 aus Siliziumcarbid, Chromoxid, kubischem Bornitrid, Diamanten, einer weiteren Keramik und/oder aus einem anderen, einem Fachmann als sinnvoll erscheinenden Material gebildet ist. Das Zusatzwirkmaterial 16 ist in einem Betriebszustand zu einer Beeinflussung eines Betriebsparameters vorgesehen. Das Zusatzwirkmaterial 16 ist in einem Betriebszustand zu einer aktiven Beeinflussung des Betriebsparameters vorgesehen. Das Zusatzwirkmaterial 16 umfasst Avogadrit, das zu einer Kühlung des Schleifelements 10 in einem Betriebszustand vorgesehen ist. Das Zusatzwirkmaterial 16 ist über den Grundkörper 12 des Schleifelements 10 verteilt angeordnet. Das Zusatzwirkmaterial 16 ist stoffschlüssig mit dem Grundmaterial 14 des Grundkörpers 12 verbunden ausgebildet. Es ist jedoch auch denkbar, dass das Zusatzwirkmaterial 16, alternativ oder zusätzlich, ein anderes, einem Fachmann als sinnvoll erscheinendes Material und/oder Materialgemisch umfasst. In einem Betriebszustand der Schleifeinheit 18 und bei einem Materialabtrag eines zu bearbeitenden Werkstücks erwärmen sich die Schleifelemente 10 der Schleifeinheit 18 stark. Dadurch schmilzt das Zusatzwirkmaterial 16 des Grundkörpers 12 auf und entzieht dem Grundkörper 12 des Schleifelements 10 thermische Energie, wodurch sich das Schleifelement 10 abkühlt.

Das Schleifelement 10 wird in einem Verfahren hergestellt, das einen ersten Schritt umfasst, in dem das Grundmaterial 14 und das Zusatzwirkmaterial 16 miteinander vermischt werden. Das Grundmaterial 14 und das Zusatzwirkmaterial 16 sind hierbei pulverförmig ausgebildet. Es ist jedoch auch denkbar, dass das Grundmaterial 14 und/oder das Zusatzwirkmaterial 16 flüssig oder auf eine andere, einem Fachmann als sinnvoll erscheinende Weise ausgebildet sind. Ein Mengenverhältnis zwischen dem Zusatzwirkmaterial 16 und dem Grundmaterial 14 beträgt 1:10. Es sind auch andere, einem Fachmann als sinnvoll erscheinende Mengenverhältnisse zwischen dem Zusatzwirkmaterial 16 und dem Grundmaterial 14 denkbar. Das Verfahren weist vorzugsweise einen weiteren Schritt auf, in dem der Grundkörper 12 aus dem Grundmaterial 14 und dem damit vermischten Zusatzwirkmaterial 16 geformt wird. Der Grundkörper 12 des Schleifelements 10 wird durch ein Einfüllen, des Grundmaterials 14 und des damit vermischten Zusatzwirkmaterials 16 in eine Form und ein anschließendes Verpressen geformt. In einem weiteren Schritt, der ein Sinterverfahren umfasst, wird der geformte Grundkörper 12 zu einer Härtung gesintert. Anschließend werden mehrere Schleifelemente 10 wie bereits beschrieben auf den Schleifscheibengrundkörper 20 der Schleifeinheit 18 aufgebracht und mit diesem verbunden.

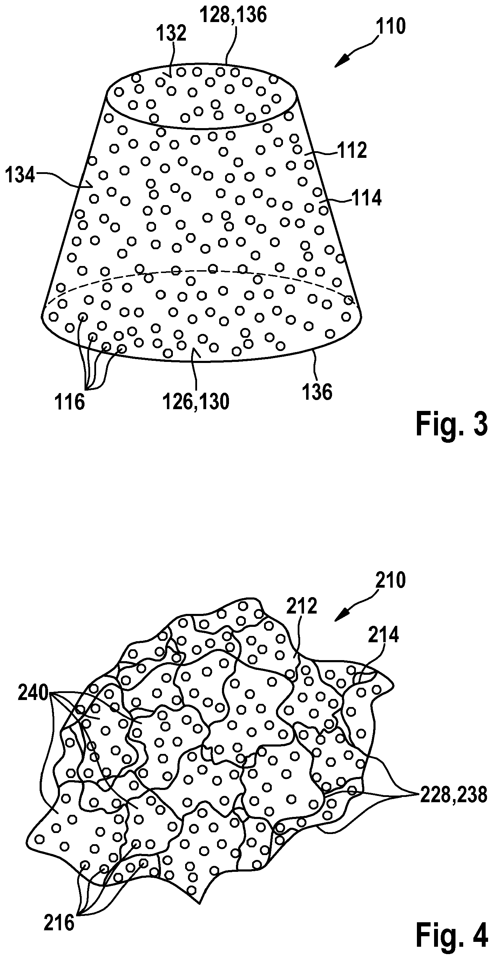

In den Figuren 3 und 4 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele sind den Bezugszeichen des Ausführungsbeispiels in Figur 3 die Ziffer 1 und den Bezugszeichen des Ausführungsbeispiels in Figur 4 die Ziffer 2 vorangestellt.

In Figur 3 ist ein alternativ ausgebildetes Schleifelement 110 dargestellt. Das Schleifelement 110 weist einen Grundkörper 112 auf, der kegelstumpfförmig ausgebildet ist. Es sind jedoch auch andere, einem Fachmann als sinnvoll erscheinende, geometrisch definierte oder geometrisch undefinierte Formen des Grundkörpers 112 denkbar. Der Grundkörper 112 umfasst eine erste Grundfläche 130 und eine zweite Grundfläche 132. Die erste Grundfläche 130 und die zweite Grundfläche 132 sind parallel zueinander angeordnet. Die erste Grundfläche 130 ist dazu vorgesehen, in einem montierten Zustand des Schleifelements 110 auf der bereits beschriebenen Schleifeinheit 18 eine Aufständerfläche 126 zu bilden. Die zweite Grundfläche 132 weist einen geringeren Flächeninhalt auf als die erste Grundfläche 130. Die erste Grundfläche 130 und die zweite Grundfläche 132 sind jeweils kreisförmig ausgebildet. Der Grundkörper 112 weist zudem eine Seitenfläche 134 auf, die sich, parallel zu einer Flächennormalen der ersten Grundfläche 130 und der zweiten Grundfläche 132 betrachtet, zwischen der ersten Grundfläche 130 und der zweiten Grundfläche 132 des Grundkörpers 112 erstreckt. Die Seitenfläche 134 schließt jeweils direkt an eine Seitenkante 136 der ersten Grundfläche 130 und der zweiten Grundfläche 132 des Grundkörpers 112 an und ist geneigt zu der ersten Grundfläche 130 und der zweiten Grundfläche 132 des Grundkörpers 112 angeordnet. Die Seitenkante 136 der zweiten Grundfläche 132 des Grundkörpers 112 bildet eine Abrasionskante 128. Die Abrasionskante 128 ist in einem Betriebszustand der Schleifeinheit 18 zu einem Materialabtrag eines zu bearbeitenden Werkstücks vorgesehen.

Der Grundkörper 112 des Schleifelements 110 umfasst ein Grundmaterial 114 und ein Zusatzwirkmaterial 116. Das Grundmaterial 114 ist von Korund gebildet. Es ist jedoch auch denkbar, dass das Grundmaterial 114 aus Siliziumcarbid, Chromoxid, kubischem Bornitrid, Diamanten, einer weiteren Keramik und/oder aus einem anderen, einem Fachmann als sinnvoll erscheinenden Material gebildet ist. Das Zusatzwirkmaterial 116 ist zu einer Beeinflussung eines Betriebsparameters vorgesehen. Das Zusatzwirkmaterial 116 umfasst Wolframcarbid, das zu einer Erhöhung einer Härte des Grundkörpers 112 des Schleifelements 110 vorgesehen ist. Das Zusatzwirkmaterial 116 ist über den Grundkörper 112 des Schleifelements 110 verteilt angeordnet. Das Zusatzwirkmaterial 116 ist stoffschlüssig mit dem Grundmaterial 114 des Grundkörpers 112 verbunden ausgebildet. Es ist jedoch auch denkbar, dass das Zusatzwirkmaterial 116, alternativ oder zusätzlich, ein anderes, einem Fachmann als sinnvoll erscheinendes Material und/oder Materialgemisch umfasst.

In Figur 4 ist ein alternativ ausgebildetes Schleifelement 210 dargestellt. Das Schleifelement 210 weist einen Grundkörper 212 auf, der eine geometrisch undefinierte Form ausweist. Es sind jedoch auch andere, einem Fachmann als sinnvoll erscheinende, geometrisch definierte oder geometrisch undefinierte Formen des Grundkörpers 212 denkbar. Kanten 238 des Grundkörpers 212 bilden Abrasionskanten 228 des Schleifelements 210, die in einem Betriebszustand der bereits beschriebenen Schleifeinheit 18 zu einem Materialabtrag eines zu bearbeitenden Werkstücks vorgesehen sind. Der Grundkörper 212 des Schleifelements 210 ist aus einem Agglomerat gebildet. Der Grundkörper 212 des Schleifelements 210 ist aus einem technischen Agglomerat gebildet. Es ist jedoch auch denkbar, dass der Grundkörper 212 des Schleifelements 210 als Konglomerat ausgebildet ist. Der Grundkörper 212 des Schleifelements 210 setzt sich aus mehreren makroskopisch kleinen Schleifpartikeln 240 zusammen. Die makroskopischen Schleifpartikel 240 sind als Granulat ausgebildet. Die Schleifpartikel 240 sind von gebrochenen Körnern gebildet. Die Schleifpartikel 240 des Grundkörpers 212 sind stoffschlüssig miteinander verbunden. Die Schleifpartikel 240 des Grundkörpers 212 sind miteinander verklebt. Es ist jedoch auch denkbar, dass die Schleifpartikel 240 des Grundkörpers 212 mittels eines Sintervorgangs stoffschlüssig miteinander verbunden sind.

Der Grundkörper 212 des Schleifelements 210 umfasst ein Grundmaterial 214 und ein Zusatzwirkmaterial 216. Die Schleifpartikel 240 des Grundkörpers 212 fassen das Grundmaterial 214 und das Zusatzwirkmaterial 216. Das Grundmaterial 214 ist von Korund gebildet. Es ist jedoch auch denkbar, dass das Grundmaterial 214 aus Siliziumcarbid, Chromoxid, kubischem Bornitrid, Diamanten, einer weiteren Keramik und/oder aus einem anderen, einem Fachmann als sinnvoll erscheinenden Material gebildet ist. Das Zusatzwirkmaterial 216 ist in einem Betriebszustand zu einer Beeinflussung eines Betriebsparameters vorgesehen. Das Zusatzwirkmaterial 216 ist in einem Betriebszustand zu einer aktiven Beeinflussung des Betriebsparameters vorgesehen. Das Zusatzwirkmaterial 216 umfasst Kryolith, das zu einer Bindung von abrasiven Stäuben, die in einem Betriebszustand des Schleifelements 210 entstehen, vorgesehen ist. Das Zusatzwirkmaterial 216 ist über den Grundkörper 212 des Schleifelements 210 verteilt angeordnet. Das Zusatzwirkmaterial 216 ist stoffschlüssig mit dem Grundmaterial 214 des Grundkörpers 212 verbunden ausgebildet. Es ist jedoch auch denkbar, dass das Zusatzwirkmaterial 216, alternativ oder zusätzlich, ein anderes, einem Fachmann als sinnvoll erscheinendes Material und/oder Materialgemisch umfasst. In einem Betriebszustand der Schleifeinheit 18 und bei einem Materialabtrag eines zu bearbeitenden Werkstücks erwärmen sich die Schleifelemente 210 der Schleifeinheit 18 stark. Dadurch wird das Zusatzwirkmaterial 216 des Grundkörpers 212 aktiv und bindet abrasive Stäube, die in einem Betriebszustand des Schleifelements 210 entstehen. Somit kann ein Zusetzen der Schleifeinheit 18 durch die abrasiven Stäube vermindert werden.

## Patentansprüche

1. Schleifelement zum Aufstreuen auf einen Schleifscheibengrundkörper (20), bestehend aus einem gesinterten Grundkörper (12, 112, 212), der zumindest ein keramisches Grundmaterial (14, 114, 214) umfasst, wobei der Grundkörper (12, 112, 212) zumindest ein Zusatzwirkmaterial (16, 116, 216) umfasst, das zumindest in einem Betriebszustand zu einer Beeinflussung zumindest eines Bearbeitungsparameters vorgesehen ist, wobei das Grundmaterial (14, 114, 214) des Grundkörpers (12, 112, 212) mit dem zumindest einen Zusatzwirkmaterial (16, 116, 216) durchmischt ist.

2. Schleifelement nach Anspruch 1, **dadurch gekennzeichnet, dass** das zumindest eine Zusatzwirkmaterial (16, 216) zumindest teilweise zu einer aktiven Beeinflussung zumindest eines Bearbeitungsparameters vorgesehen ist.

3. Schleifelement nach einem der vorhergehenden Ansprüche, **dadurch gekennzeichnet, dass** das zumindest eine Zusatzwirkmaterial (16, 116, 216) zumindest teilweise stoffschlüssig mit dem Grundmaterial (14, 114, 214) verbunden ist.

4. Schleifelement nach einem der vorhergehenden Ansprüche, **dadurch gekennzeichnet, dass** das zumindest eine Zusatzwirkmaterial (16) zumindest Avogadrit umfasst, das zumindest teilweise zu einer Kühlung in einem Betriebszustand vorgesehen ist.

5. Schleifelement nach einem der vorhergehenden Ansprüche, **dadurch gekennzeichnet, dass** das zumindest eine Zusatzwirkmaterial (116) zumindest Wolframcarbid zu einer Erhöhung einer Härte des Grundkörpers (112) umfasst.

6. Schleifeinheit mit mehreren Schleifelementen (10, 110, 210) nach einem der vorhergehenden Ansprüche.

7. Verfahren zur Herstellung eines Schleifelements (10, 110, 210) nach einem der vorhergehenden Ansprüche mit zumindest einem ersten Schritt, in dem ein keramisches Grundmaterial (14, 114, 214) mit zumindest einem Zusatzwirkmaterial (16, 116, 216) vermischt wird, mit zumindest einem weiteren Schritt, in dem ein Grundkörper (12, 112, 212) aus dem Grundmaterial (14, 114, 214) und dem zumindest einen Zusatzwirkmaterial (16, 116, 216) geformt wird, sowie mit zumindest einem weiteren Schritt, der ein Sinterverfahren umfasst.

## Claims

1. Grinding element for scattering onto a grinding disc basic body (20), consisting of a sintered basic body (12, 112, 212) which comprises at least one ceramic base material (14, 114, 214), wherein the basic body (12, 112, 212) comprises at least one additional active material (16, 116, 216) which, at least in one operating state, is provided to influence at least one operating parameter, wherein the base material (14, 114, 214) of the basic body (12, 112, 212) is mixed with the at least one additional active material (16, 116, 216).

2. Grinding element according to Claim 1, **characterized in that** the at least one additional active material (16, 216) is provided at least in part for actively influencing at least one operating parameter.

3. Grinding element according to either of the preceding claims, **characterized in that** the at least one additional active material (16, 116, 216) is connected at least in part to the base material (14, 114, 214) in an integrally bonded manner.

4. Grinding element according to one of the preceding claims, **characterized in that** the at least one additional active material (16) at least comprises avogadrite which is provided at least in part for cooling in an operating state.

5. Grinding element according to one of the preceding claims, **characterized in that** the at least one additional active material (116) at least comprises tungsten carbide for increasing a hardness of the basic body (112).

6. Grinding unit having a plurality of grinding elements (10, 110, 210) according to one of the preceding claims.

7. Method for producing a grinding element (10, 110, 210) according to one of the preceding claims, comprising at least a first step in which a ceramic base material (14, 114, 214) is mixed with at least one additional active material (16, 116, 216), comprising at least a further step in which a basic body (12, 112, 212) is formed from the base material (14, 114, 214) and the at least one additional active material (16, 116, 216), and comprising at least a further step which comprises a sintering method.

## Revendications

1. Élément abrasif destiné à être répandu sur un corps de base de disque de meule (20), constitué d'un corps de base fritté (12, 112, 212) qui comprend au moins un matériau de base céramique (14, 114, 214), le corps de base (12, 112, 212) comprenant au moins un matériau fonctionnel supplémentaire (16, 116, 216) qui est prévu au moins dans un état de fonctionnement pour influencer au moins un paramètre d'usinage, le matériau de base (14, 114, 214) du corps de base (12, 112, 212) se mélangeant avec l'au moins un matériau fonctionnel supplémentaire (16, 116, 216) .

2. Élément abrasif selon la revendication 1, **caractérisé en ce que** l'au moins un matériau fonctionnel supplémentaire (16, 216) est prévu au moins en partie pour influencer activement au moins un paramètre d'usinage.

3. Élément abrasif selon l'une quelconque des revendications précédentes, **caractérisé en ce que** l'au moins un matériau fonctionnel supplémentaire (16, 116, 216) est lié au moins en partie par liaison de matière au matériau de base (14, 114, 214).

4. Élément abrasif selon l'une quelconque des revendications précédentes, **caractérisé en ce que** l'au moins un matériau fonctionnel supplémentaire (16) comprend au moins de l'avogadrite qui est prévue au moins en partie pour produire un refroidissement dans un état de fonctionnement.

5. Élément abrasif selon l'une quelconque des revendications précédentes, **caractérisé en ce que** l'au moins un matériau fonctionnel supplémentaire (116) comprend au moins du carbure de tungstène pour augmenter la dureté du corps de base (112).

6. Unité de meulage comprenant plusieurs éléments abrasifs (10, 110, 210) selon l'une quelconque des revendications précédentes.

7. Procédé pour fabriquer un élément abrasif (10, 110, 210) selon l'une quelconque des revendications précédentes comprenant au moins une première étape dans laquelle un matériau de base céramique (14, 114, 214) est mélangé avec au moins un matériau fonctionnel supplémentaire (16, 116, 216), comprenant au moins une étape supplémentaire dans laquelle un corps de base (12, 112, 212) est formé à partir du matériau de base (14, 114, 214) et de l'au moins un matériau fonctionnel supplémentaire (16, 116, 216), et comprenant au moins une étape supplémentaire qui comprend un procédé de frittage.
